# EUROPÄISCHE PATENTSCHRIFT

(11) **EP 4 134 294 B1**
(45) Veröffentlichungstag und Bekanntmachung des Hinweises auf die Patenterteilung: **11.06.2025**
(21) Anmeldenummer: 22168283.4
(22) Anmeldetag: 14.04.2022
(51) Int. Cl.: B62D 5/00, B62D 5/09

(54) **LENKSYSTEM FÜR EIN LANDWIRTSCHAFTLICHES FAHRZEUG**
STEERING SYSTEM FOR AN AGRICULTURAL VEHICLE
SYSTÈME DE DIRECTION POUR UN VÉHICULE AGRICOLE

(30) Priorität: 13.08.2021 DE 102021121139
(43) Veröffentlichungstag der Anmeldung: 15.02.2023
(73) Patentinhaber: CLAAS Selbstfahrende Erntemaschinen GmbH, 33428 Harsewinkel (DE)
(72) Erfinder: Selbach, Rainer, 33378 Rheda-Wiedenbrück (DE); Gausmann, Ludger, 49170 Hagen a.T. (DE)
(74) Vertreter: CLAAS Gruppe

(56) Entgegenhaltungen:
- EP-B1- 0 974 508
- US-A1- 2018 297 632

## Beschreibung

Die vorliegende Erfindung betrifft ein Lenksystem für ein landwirtschaftliches Fahrzeug gemäß dem Oberbegriff des Anspruches 1.

Aus der EP 0 974 508 B1 ist ein Lenksystem für ein landwirtschaftliches Fahrzeug der eingangs genannten Art bekannt. Das Fahrzeug weist mindestens eine primärgesteuerte Achse und mindestens eine weitere Achse auf, denen jeweils zumindest ein Lenkzylinder zur Änderung eines Radeinschlagwinkels zugeordnet ist. Den an den Achsen angeordneten Räderpaaren ist der doppeltwirkende Lenkzylinder zur Betätigung der Räder zugeordnet, wobei die Lenkzylinder mit einem von einer Ventileinheit zugeführten Fluid beaufschlagt werden, welches mittels einer Hydraulikpumpe der Ventileinheit zugeführt wird. Die Ventileinheit besteht aus einer elektrohydraulischen Lenksteuer- und Schalteinheit und einer hydraulischen Lenksteuer- und Schalteinheit, die eine mit einem Lenkrad des Fahrzeugs in Verbindung stehende hydraulische Einrichtung, ein sogenanntes Orbitrol, aufweist. Jede der Lenksteuer- und Schalteinheiten weist Schaltventile auf. Die Schaltventile der jeweiligen Schalteinheiten werden einzeln angesteuert, um unterschiedliche Lenkungsarten bei der Ansteuerung der Achsen zu ermöglichen. Eine Lenkungsart sieht die Ansteuerung nur der primärgesteuerten Achse vor, eine weitere Lenkungsart sieht eine Allradlenkung vor. Bei der Allradlenkung wird durch die erste und die zweite Lenksteuereinheit und den zugehörigen Schalteinheiten jeweils ein Lenkzylinder angesteuert. Durch das Ansteuern der Schaltventile der Schalteinheiten lässt sich ein Lenkmodus einstellen, bei welchem das Fluid unter Umgehung der Lenkzylinder direkt zu der hydraulischen Einrichtung zurückfließt und der verdrängte Fluidstrom keinen Einfluss auf den Ausschlag der Räder hat. Hierdurch wird an einem mit der hydraulischen Einrichtung wirkverbundenen Lenkrad ein Lenkradgegenmoment erzeugt, das demjenigen bei Ansteuerung der Lenkzylinder mittels Betätigung der hydraulischen Einrichtung entspricht. Das mit einem elektrischen Drehgeber verbundene Lenkrad wird als Lenkwinkel-Sollwertgeber eingesetzt, wobei der Fahrer des Fahrzeugs das gleiche Lenkgefühl wahrnimmt. In diesem Lenkmodus lässt sich das Lenkrad weiterdrehen, auch wenn ein im Lenkzylinder angeordneter doppeltwirkender Kolben seine Maximalstellung erreicht hat, was einem Lenkanschlag entspricht. Der Fahrer erhält somit keinerlei Rückmeldung von dem Lenksystem, die ihn darüber in Kenntnis setzt, dass der maximale Lenkanschlag erreicht ist. Ferner erhält der Fahrer in diesem Lenkmodus keine Kraftrückmeldung der Lenkung in der Form, wie er es bei einer hydraulischen Lenkung mittels der hydraulischen Einrichtung respektive des Orbitrols gewohnt ist.

Darüber hinaus offenbart die US 2018/0297632 A1 in Bezug auf den unabhängigen Anspruch ein Lenksystem für ein landwirtschaftliches Fahrzeug, umfassend: mindestens eine primärgesteuerte Achse und mindestens eine weitere Achse, denen jeweils zumindest ein Lenkzylinder zur Änderung eines Radeinschlagwinkels des landwirtschaftlichen Fahrzeugs zugeordnet ist, eine mit einer Versorgungseinheit verbundene Ventileinheit zur Druckbeaufschlagung der Lenkzylinder, wobei die Ventileinheit eine erste Lenksteuer-und Schalteinheit mit einer Proportionaleinheit und einer Sperreinheit sowie eine zweite Lenksteuer-und Schalteinheit mit einer hydraulischen Einrichtung und zumindest einem Schaltventil umfasst, zumindest eine Steuerungsvorrichtung, die zur Ansteuerung der ersten Lenksteuer- und Schalteinheit eingerichtet ist, wobei das Lenksystem in einem ersten Lenkmodus und zumindest einem weiteren Lenkmodus betreibbar ist, wobei die zumindest eine Steuerungsvorrichtung dazu eingerichtet ist, in dem ersten Lenkmodus eine Lenkbewegung eines mit der zweiten Lenksteuer- und Schalteinheit verbundenen Lenkrades sensorisch zu erfassen und auszuwerten, um basierend auf der Auswertung die erste Lenksteuer- und Schalteinheit anzusteuern, wobei die zumindest eine Steuerungsvorrichtung dazu eingerichtet ist, in dem ersten Lenkmodus mittels eines singulären, insbesondere elektrischen, Signals das Schaltventil anzusteuern, um zumindest ein Betätigungsverhalten des Lenkrades einzustellen.

Ausgehend von dem vorstehend genannten Stand der Technik liegt der Erfindung die Aufgabe zugrunde, ein Lenksystem für ein landwirtschaftliches Fahrzeug der vorstehend genannten Art weiterzubilden, welches sich durch ein einstellbares Betätigungsverhalten eines Lenkrades auszeichnet.

Diese Aufgabe wird aus vorrichtungstechnischer Sicht durch die Merkmale des unabhängigen Anspruchs gelöst. Die hierauf jeweils folgenden, abhängigen Ansprüche geben vorteilhafte Weiterbildungen der Erfindung wieder.

Gemäß der Erfindung wird ein Lenksystem für ein landwirtschaftliches Fahrzeug vorgeschlagen, umfassend:
- mindestens eine primärgesteuerte Achse und mindestens eine weitere Achse, denen jeweils zumindest ein Lenkzylinder zur Änderung eines Radeinschlagwinkels des landwirtschaftlichen Fahrzeugs zugeordnet ist,
- eine mit einer Versorgungseinheit verbundene Ventileinheit zur Druckbeaufschlagung der Lenkzylinder, wobei die Ventileinheit eine erste Lenksteuer- und Schalteinheit mit einer Proportionaleinheit und einer Sperreinheit sowie eine zweite Lenksteuer- und Schalteinheit mit einer hydraulischen Einrichtung und zumindest drei Schaltventilen umfasst,
- zumindest eine Steuerungsvorrichtung, die zur Ansteuerung der ersten Lenksteuer-und Schalteinheit eingerichtet ist,
wobei das Lenksystem in einem ersten Lenkmodus und zumindest einem weiteren Lenkmodus betreibbar ist, wobei die zumindest eine Steuerungsvorrichtung dazu eingerichtet, in dem ersten Lenkmodus eine Lenkbewegung eines mit der zweiten Lenksteuer- und Schalteinheit verbundenen Lenkrades sensorisch zu erfassen und auszuwerten, um basierend auf der Auswertung die erste Lenksteuer- und Schalteinheit anzusteuern.

Erfindungsgemäß ist vorgesehen, dass die zumindest eine Steuerungsvorrichtung dazu eingerichtet ist, im ersten Lenkmodus mittels eines singulären, insbesondere elektrischen, Signals die mindestens drei Schaltventile gleichzeitig anzusteuern, um zumindest ein Betätigungsverhalten des Lenkrades einzustellen. Die zumindest eine Steuerungsvorrichtung generiert ein singuläres elektrisches Signal, welches zur gleichzeitigen Ansteuerung der zumindest drei Schaltventile verwendet wird.

Der Erfindung liegt die Überlegung zugrunde, dass in dem ersten Lenkmodus, nachfolgend auch als vollelektronischer Lenkmodus bezeichnet, in welchem die Lenkbewegung des mit der zweiten Lenksteuer- und Schalteinheit verbundenen Lenkrades sensorisch erfasst und als Lenkwinkelsollsignal an die erste Lenksteuer- und Schalteinheit zu übertragen wird, dem Fahrer des Fahrzeugs auf einfache Weise die Möglichkeit eingeräumt wird, zumindest ein Betätigungsverhalten des Lenkrades einzustellen. Der Begriff Betätigungsverhalten des Lenkrades beschreibt das aus dem Betätigen des Lenkrades zur Einstellung eines Lenkwinkels resultierende Verhalten, welches sich durch das Fehlen oder das Vorhandensein einer haptischen Wahrnehmung durch den Fahrer auszeichnet. In dem ersten Lenkmodus sind Ausgänge der hydraulischen Einrichtung respektive des Orbitrols miteinander verbunden, so dass das Orbitrol bei der Drehung des Lenkrades seinen Volumenstrom direkt in Richtung Tank fördert.

Bei dem landwirtschaftlichen Fahrzeug handelt es sich insbesondere um einen Traktor. Insbesondere weist der Traktor zwei lenkbare Achsen auf.

Die zumindest eine Steuerungsvorrichtung kann mit einer Speichereinheit, in der Kennlinien zur Ansteuerung der ersten Lenksteuer- und Schalteinheit hinterlegt sind, und mit einer Recheneinheit zur Verarbeitung der Kennlinien ausgeführt sein.

Erfindungsgemäß umfasst die zweite Lenksteuer- und Schalteinheit ein elektrisch angesteuertes Betätigungsventil, welches bei einer Ansteuerung durch das singuläre elektrische Signal der zumindest einen Steuerungsvorrichtung einen Schaltdruck bereitstellt, welcher die drei Schaltventile gleichzeitig beaufschlagt. Das Betätigungsventil stellt bei entsprechender Ansteuerung einen Schaltdruck bereit, welcher die Schaltstellung der drei Schaltventile gleichzeitig verändert.

Dabei führt die Beaufschlagung der drei Schaltventile mit dem Schaltdruck des Betätigungsventils zur Unterbrechung der hydraulischen Verbindung der zweiten Lenksteuer-und Schalteinheit mit den Lenkzylindern. Bei dieser Beaufschlagung stellt sich der vollelektronische Lenkmodus ein, wobei sich als ein Betätigungsverhalten des Lenkrades das Drehen des Lenkrades auch über das Erreichen eines Endanschlages der Lenkzylinder hinaus bewegen bzw. drehen lässt.

Bevorzugt können zwei der Schaltventile der zweiten Lenksteuer- und Schalteinheit als Normally Open Ventile (NO-Ventile) und eines der Schaltventile kann als Normally Closed Ventil (NC-Ventil) ausgeführt sein. Die als beiden als NO-Ventile ausgeführten Schaltventile befinden sich bei fehlender Beaufschlagung mit einem Schaltdruck in geöffneter Schaltstellung. Das als NC-Ventil ausgeführte Schaltventil befindet sich bei fehlender Beaufschlagung mit einem Schaltdruck in geschlossener Schaltstellung.

Dabei kann das als NC-Ventil ausgeführte Schaltventil zwischen Hydraulikleitungen, welche die hydraulische Einrichtung durch das jeweilige als NO-Ventil ausgeführte Schaltventil mit den Lenkzylindern verbinden, angeordnet sein. Durch Schalten des als NC-Ventil ausgeführten Schaltventils können die Ausgänge des Orbitrols miteinander verbunden, d.h. kurzgeschlossen, werden.

Bei einer elektrischen Ansteuerung des Betätigungsventils durch die zumindest eine Steuerungsvorrichtung werden die beiden als NO-Ventile ausgeführten Schaltventile durch Beaufschlagung mit einem Steuerdruck in ihre geschlossene Schaltstellung überführt, während das als NC-Ventil ausgeführten Schaltventil in seine geöffnete Schaltstellung überführt wird. In geschlossener Schaltstellung der beiden NO-Ventile wird die hydraulische Verbindung der hydraulischen Einrichtung respektive des Orbitrols zu den Lenkzylindern unterbrochen. In geöffneter Schaltstellung des NC-Ventils stellt dieses eine hydraulische Verbindung zwischen den Ausgängen des Orbitrols her, so dass das Orbitrol seinen Volumenstrom deshalb bei der Drehung des Lenkrades direkt in Richtung Tank zurückfördert. In der Folge stellt sich im vollelektronischen Lenkmodus ein Betätigungsverhalten des Lenkrades ein, in welchem der Fahrer das Lenkrad endlos drehen kann.

Gemäß einer bevorzugten Weiterbildung kann dem als NC-Ventil ausgeführten Schaltventil ein elektrisch angesteuertes Drosselventil vorgeschaltet sein. Durch eine Ansteuerung des elektrisch angesteuerten Drosselventils lassen sich weitere Betätigungsverhalten des Lenkrades einstellen. Die Ansteuerung erfolgt in Abhängigkeit von der Betätigung des Lenkrades, um einen Lenkwinkel einzustellen.

Insbesondere kann das Drosselventil dazu eingerichtet sein, den Volumenstrom zwischen der hydraulischen Einrichtung und einem Tank proportional zur Bestromung bis auf eine Mindestdurchflussmenge zu drosseln. Das elektrisch angesteuerte Drosselventil dient dazu, den im ersten Lenkmodus bzw. vollelektronischer Lenkmodus vom Orbitrol direkt in den Tank abgeleiteten Volumenstrom in unbestromtem Zustand ungedrosselt passieren zu lassen und mit zunehmender Bestromung bis auf eine Mindestdurchflussmenge zu drosseln. Die Bestromung des Drosselventils erfolgt vorzugsweise in Abhängigkeit vom sich aufgrund der Lenkbewegung des Lenkrades einstellenden Lenkwinkels. Durch die Drosselung des kurzgeschlossenen Volumenstroms lässt sich eine vom Fahrer fühlbare Krafterhöhung am Lenkrad erzielen, welche ein weiteres Betätigungsverhalten des Lenkrades darstellt. Die Mindestdurchflussmenge ist auf einen Wert eingestellt, welcher auch bei einer maximalen Bestromung gewährleistet, dass der Fahrer das Lenkrad drehen kann, um die Lenkbarkeit des Fahrzeugs auch bei einem Versagen des Drosselventils sicherzustellen.

Alternativ oder zusätzlich kann das Drosselventil dazu eingerichtet sein, den Volumenstrom zwischen der hydraulischen Einrichtung und einem Tank proportional zur Bestromung bis zur Unterbrechung des Durchflusses zu drosseln. Das nur eine Drosselventil kann dabei dazu eingerichtet sein, sowohl mit zunehmender Bestromung bis auf eine Mindestdurchflussmenge zu drosseln als auch proportional zur Bestromung bis zur Unterbrechung des Durchflusses zu drosseln. Die Charakteristik der Ansteuerung des Drosselventils, d.h., dass das nur eine Drosselventil bis zum Erreichen der Mindestdurchflussmenge oder bis zur Unterbrechung des Durchflusses drosselt, kann durch die zumindest eine Steuerungsvorrichtung vorgegeben werden. Mit dem Erreichen eines Endanschlages des oder der Hydraulikzylinder ist die Bestromung des Drosselventils maximal, so dass es zur Unterbrechung des Durchflusses zwischen Orbitrol und dem Tank kommt. Mit der Sperrung der Verbindung zwischen den beiden Ausgängen des Orbitrols lässt sich das Lenkrad nicht mehr drehen. Auf diese Weise lässt sich ein Endanschlag des Lenkrades, welcher ein Weiterdrehen verhindert, als ein weiteres Betätigungsverhalten simulieren.

Hierbei kann es aus Gründen der Betriebssicherheit sinnvoll sein, dass ein Druckschalter vorgesehen ist, der in Abhängigkeit von einem durch die Betätigung des Lenkrades eingeprägten Druck schaltet, um die Unterbrechung des Durchflusses aufzuheben. Somit kann vermieden werden, dass bei einem Versagen des Drosselventils im Moment der Unterbrechung des Durchflusses das Lenkrad nicht mehr betätigbar ist. In einer solchen Situation kann der Druckschalter öffnen, um den vollelektronischen Lenkmodus aufzuheben. Dazu kann durch das Auslösen des Druckschalters die Verbindung der Ausgänge des Orbitrols mit den NO-Ventilen der zweiten Lenksteuer- und Schalteinheit wiederhergestellt werden.

Insbesondere kann die zumindest eine Steuerungsvorrichtung dazu eingerichtet sein, die Bestromung des elektrisch angesteuerten Drosselventils in Abhängigkeit vom eingestellten Lenkwinkel einzustellen. Somit kann bei zunehmendem Lenkwinkel und der sich daraus ergebenden Annäherung an den Endanschlag des oder der Hydraulikzylinder die Drosselung des Volumenstroms zunehmen, bis die eingestellte Mindestdurchflussmenge erreicht oder die Unterbrechung des Durchflusses erfolgt ist.

Gemäß einer bevorzugten Weiterbildung kann der zumindest einen Steuerungsvorrichtung ein eine Selbsthaltefunktion aufweisendes Bedienelement zur Ansteuerung des Betätigungsventils zugeordnet sein. Somit kann eine elektrische Ansteuerung des Betätigungsventils beispielsweise durch eine elektrische Selbsthaltung nach einer Betätigung eines als Taster oder Schalter ausgeführten Bedienelementes erfolgen. Durch das Betätigen des Bedienelementes kann der Fahrer in den vollelektronischen Lenkmodus wechseln. Die elektrische Selbsthaltung kann durch eine erneute Betätigung des Bedienelementes oder die Betätigung eines anderen Elementes, beispielsweise eines Straßenfahrschalters oder die Auswahl eines anderen Lenkprogrammes, wieder aufgegeben werden, so dass das Lenksystem in einen anderen Lenkmodus, insbesondere den Lenkmodus Orbitrollenkung, wechselt bzw. zurückfällt.

Ein Betätigungsverhalten des Lenkrades kann ein fortgesetztes Betätigen des Lenkrades unabhängig vom Erreichen eines Endanschlages des Lenkzylinders der primärgesteuerten Achse sein.

Ein Betätigungsverhalten des Lenkrades kann das Hervorrufen eines zunehmenden Widerstands beim Betätigen des Lenkrades sein.

Ein Betätigungsverhalten des Lenkrades kann das Erreichen eines Endanschlages des Lenkzylinders simulieren.

Insbesondere können das Betätigungsventil und/oder das Drosselventil in einem gemeinsamen Gehäuse der ersten Lenksteuer- und Schalteinheit und/oder der zweiten Lenksteuer- und Schalteinheit oder in einem separaten Gehäuse angeordnet sein. Das Anordnen des Betätigungsventils und/oder des Drosselventils in einem separaten Gehäuse hat den Vorteil, dass die Komponenten nachrüstbar sind bzw. optional in Fahrzeugen verbaut werden können, welche den vollelektronischen Lenkmodus nutzen.

Für die Ansteuerung der ersten Lenksteuer- und Schalteinheit kann gemäß einer Ausführungsform genau eine Steuerungsvorrichtung vorgesehen sein, welche neben der Proportionaleinheit und der Sperreinheit zumindest das Betätigungsventil ansteuert. Darüber hinaus kann die genau eine Steuerungsvorrichtung dazu eingerichtet sein, zudem die Ansteuerung der zweiten Lenksteuer- und Schalteinheit vorzunehmen.

Alternativ können zwei Steuerungsvorrichtungen vorgesehen sein, von denen die eine Steuerungsvorrichtung der Ansteuerung der ersten Lenksteuer- und Schalteinheit und die andere Steuerungsvorrichtung der Ansteuerung der zweiten Lenksteuer- und Schalteinheit dient. Dabei kann weiter vorgesehen sein, dass eine der beiden Steuerungsvorrichtungen zur Ansteuerung zumindest des Betätigungsventils der zweiten Lenksteuer-und Schalteinheit eingerichtet ist.

Die vorliegende Erfindung wird nachstehend anhand von in den Zeichnungen dargestellten Ausführungsbeispielen näher erläutert.

Es zeigen:
- Fig. 1: ein Blockschaltbild eines Lenksystems;
- Fig. 2: ein Blockschaltbild des Lenksystems gemäß Fig. 1 nach einem weiteren Ausführungsbeispiel; und
- Fig. 3: ein Blockschaltbild des Lenksystems gemäß Fig. 1 nach einem dritten Ausführungsbeispiel.

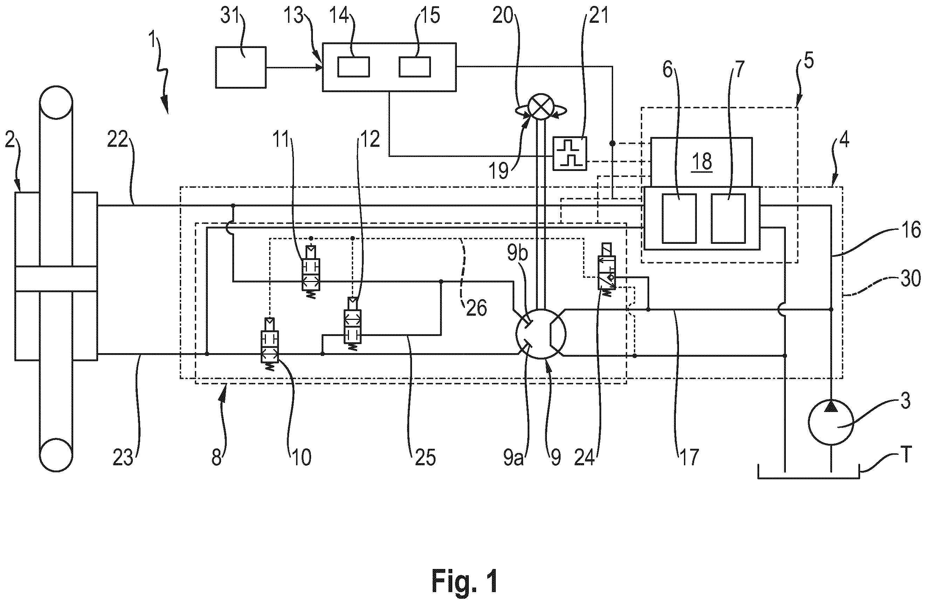

Ein landwirtschaftliches Fahrzeug, insbesondere ein Traktor, weist zumindest zwei Achsen, eine Vorderachse und eine Hinterachse, mit daran angeordneten Rädern auf. Zum Lenken des Fahrzeugs ist ein Lenksystem 1 vorgesehen, wie in Fig. 1 dargestellt. Das Lenksystem 1 ermöglicht eine Mehrachslenkung, welche dort eingesetzt wird, wo unterschiedliche Einsatzzwecke landwirtschaftlicher Fahrzeuge eine Anpassung der Eigenschaften des Fahrzeuges bezüglich Wendigkeit und Spurtreue erforderlich machen. Diese erhöhten Anforderungen lassen sich durch verschiedene Lenkungsarten verwirklichen. Neben der allgemein üblichen Vorderachslenkung, bei der nur die Vorderräder eingeschlagen werden, während die Hinterräder in Geradeausstellung verbleiben, besitzen landwirtschaftliche Fahrzeuge eine als Allradlenkung bezeichnete Lenkungsart, bei der Vorder- und Hinterräder gegensinnig eingeschlagen werden. Eine Allradlenkung wird bevorzugt dort eingesetzt, wo Bewegungen des Fahrzeugs auf kleinem Raum durchzuführen sind. Mit einem gegensinnigen Einschlag von Vorder- und Hinterrädern lassen sich beispielsweise beim Rangieren besonders kleine Wendekreise des Fahrzeugs realisieren. Darüber hinaus ist als weitere Lenkungsart der sogenannte Hundegang bekannt, bei der Vorder- und Hinterräder gleichsinnig eingeschlagen werden.

Die Darstellung in Fig. 1 zeigt das erfindungsgemäße Lenksystem 1, welches mindestens eine primärgesteuerte Achse, hier und vorzugsweise die Vorderachse, und mindestens eine weitere Achse, hier die Hinterachse, denen jeweils zumindest ein Lenkzylinder 2 zur Änderung eines Radeinschlagwinkels des landwirtschaftlichen Fahrzeugs zugeordnet ist, umfasst. Weiterhin umfasst das Lenksystem 1 eine mit einer Versorgungseinheit 3 verbundene Ventileinheit 4 zur Druckbeaufschlagung der Lenkzylinder 2, wobei die Ventileinheit 4 eine erste Lenksteuer- und Schalteinheit 5 mit einer Proportionaleinheit 6 und einer Sperreinheit 7 und eine zweite Lenksteuer- und Schalteinheit 8 mit einer hydraulischen Einrichtung 9, nachfolgend synonym als Orbitrol bezeichnet, und zumindest drei Schaltventile 10, 11, 12 umfasst. Von dem Lenksystem 1 umfasst ist außerdem zumindest eine Steuerungsvorrichtung 13 und/oder 18. Zumindest die Steuerungsvorrichtung 13 kann mit einer Speichereinheit 14, in welcher Kennlinien zur Ansteuerung der ersten Lenksteuer- und Schalteinheit 5 hinterlegt sind, und mit einer Recheneinheit 15 zur Verarbeitung der in der Speichereinheit 14 hinterlegten Kennlinien ausgeführt sein.

Die Lenkzylinder 2 sind als doppeltwirkende Hydraulikzylinder ausgeführt. Die als Hydraulikpumpe ausgeführte Versorgungseinheit 3 ist durch eine erste Versorgungsleitung 16 mit der ersten Lenksteuer- und Schalteinheit 5 und dem Lenkzylinder 2 verbunden. Zudem ist die Versorgungseinheit 3 durch eine zweite Versorgungsleitung 17 mit der zweiten Lenksteuer- und Schalteinheit 5 und dem Lenkzylinder 2 verbunden.

Das Lenken des Fahrzeugs erfolgt zum einen mittels der ersten Lenksteuer- und Schalteinheit 5 hydraulisch. Die Proportionaleinheit 6 umfasst zumindest ein elektrisch angesteuertes Proportionalventil und die Sperreinheit 7 zwei elektrisch angesteuerte Schaltventile. Die elektrische Ansteuerung der ersten Lenksteuer- und Schalteinheit 5 kann durch die zumindest eine Steuerungsvorrichtung 13 erfolgen. Alternativ kann die erste Lenksteuer- und Schalteinheit 5 zu ihrer elektrischen Ansteuerung die als elektronisches Modul ausgeführte Steuerungsvorrichtung 18 umfassen.

Eine von einem in einer Fahrerkabine des Fahrzeugs angeordneten Lenkrad 19 erzeugte Lenkbewegung 20 wird sensorisch erfasst, beispielsweise durch einen Lenkradgeber 21. Die Steuerungsvorrichtung 13 ist dazu eingerichtet, die Messsignale des Lenkradgebers 21 auszuwerten und in Abhängigkeit von der Auswertung Steuersignale zu generieren, mit denen die erste Lenksteuer- und Schalteinheit 5 angesteuert wird. Die Ansteuerung der ersten Lenksteuer- und Schalteinheit 5 kann unmittelbar durch die Steuerungsvorrichtung 13 oder durch die als elektronisches Modul ausgeführte Steuerungsvorrichtung 18 durchgeführt werden. Alternativ kann die Steuerungsvorrichtung 18 diese Aufgabe anstelle der Steuerungsvorrichtung 13 übernehmen, so dass auf die Steuerungsvorrichtung 13 als solche verzichtet werden könnte.

Hierzu befinden sich die Schaltventile 10, 11, 12 in ihrer in Fig. 1 dargestellten Schaltstellung. Die beiden Schaltventile 10, 11 sind als Normally Open Ventile (NO-Ventile) ausgeführt und befinden sich bei fehlender Beaufschlagung mit einem Schaltdruck in geöffneter Schaltstellung. Das dritte Schaltventil 12 ist Normally Closed Ventil (NC-Ventil) ausgeführt und befindet sich bei fehlender Beaufschlagung mit einem Schaltdruck in geschlossener Schaltstellung. Entsprechend der dargestellten Schaltstellung der Schaltventile 10, 11, 12 stehen Ausgänge 9a, 9b des Orbitrols 9 über Hydraulikleitungen 22, 23 mit dem Lenkzylinder 2 in Verbindung. Hierzu ist das dritte Schaltventil 12 zwischen einer Hydraulikleitung 25 angeordnet, welche die den Ausgängen 9a, 9b des Orbitrols 9 zugeordneten Hydraulikleitungen 22, 23 miteinander verbindet. Entsprechend der dargestellten Schaltstellung der Schaltventile 10, 11, 12 erfährt der Fahrer des Fahrzeugs bei Erreichen eines Endanschlags des Lenkzylinders 2 eine haptische Rückmeldung. Dieser Lenkmodus wird als Orbitrollenkung bezeichnet.

Zum anderen erfolgt das Lenken des Fahrzeugs mittels der zweiten Lenksteuer- und Schalteinheit 8. Durch Beaufschlagung der Schaltventile 10, 11, 12 mit einem Steuerdruck ändern diese ihre Schaltstellung, wobei die Schaltventile 10, 11 bei entsprechender Druckbeaufschlagung die Trennung des Orbitrols 9 von dem Lenkzylinder 2 bewirken. Das Schaltventil 12 stellt bei Beaufschlagung mit einem Steuerdruck eine Verbindung zwischen den Ausgängen 9a, 9b des Orbitrols 9 her. Das Orbitrol 9 fördert den von der Versorgungseinheit 3 durch die Versorgungsleitung 17 zugeführten Volumenstrom in einen Tank T zurück. Durch das "Kurzschließen" des Orbitrols 9 kann ein Fahrer das Lenkrad 19 endlos drehen, auch wenn der Lenkzylinder 2 seinen Endanschlag bereits erreicht hat.

Das Lenksystem 1 ist in einem ersten Lenkmodus und zumindest einem weiteren Lenkmodus, wie dem Lenkmodus Orbitrollenkung, betreibbar, wobei die Steuerungsvorrichtung 13 oder die Steuerungsvorrichtung 18 dazu eingerichtet, in dem ersten Lenkmodus die Lenkbewegung 20 des mit der zweiten Lenksteuer- und Schalteinheit 8 verbundenen Lenkrades 19 sensorisch zu erfassen und als Lenkwinkelsollsignal an die erste Lenksteuer- und Schalteinheit 5 zu deren Ansteuerung zu übertragen. Der erste Lenkmodus, in dem das Lenken des Fahrzeugs mittels der zweiten Lenksteuer- und Schalteinheit 8 erfolgt, wird als vollelektronischer Lenkmodus bezeichnet.

Um in den ersten Lenkmodus respektive vollelektronischen Lenkmodus zu wechseln, ist es erforderlich die mindestens drei Schaltventile 10, 11, 12 anzusteuern, was gemäß dem Stand der Technik durch eine einzelne Ansteuerung der Schaltventile erfolgt. Die Steuerungsvorrichtung 13 oder die Steuerungsvorrichtung 18 ist dazu eingerichtet, in dem vollelektronischen Lenkmodus mittels eines singulären, insbesondere elektrischen, Signals die mindestens drei Schaltventile 10, 11, 12 gleichzeitig anzusteuern, um zumindest ein Betätigungsverhalten des Lenkrades 19 einzustellen.

Hierzu umfasst die zweite Lenksteuer- und Schalteinheit 8 ein elektrisch angesteuertes Betätigungsventil 24. Das elektrisch angesteuerte Betätigungsventil 24 stellt bei einer Ansteuerung durch das von der Steuerungsvorrichtung 13 oder der Steuerungsvorrichtung 18 generierte elektrische Signal einen Schaltdruck bereit, welcher die drei Schaltventile 10, 11, 12 gleichzeitig beaufschlagt. Hierdurch stellt sich ein Betätigungsverhalten des Lenkrades 19 ein, welches ein fortgesetztes Betätigen des Lenkrades 19 unabhängig vom Erreichen eines Endanschlages des Lenkzylinders 2 der primärgesteuerten Achse ist. Das Betätigungsventil 24 ist durch eine Steuerleitung 26 mit den Schaltventilen 10, 11, 12 signaltechnisch verbunden. In der dargestellten Schaltstellung steht die Steuerleitung 26 mit dem Tank T in Verbindung. Durch die Ansteuerung mittels der der Steuerungsvorrichtung 13 oder der Steuerungsvorrichtung 18 wird das Betätigungsventil 24 in eine Schaltstellung überführt, in welcher die Steuerleitung 26 mit der Versorgungsleitung 17 verbunden ist. Somit werden die drei Schaltventile 10, 11, 12 gleichzeitig mit ihrem Steuerdruck beaufschlagt, um das zumindest eine Betätigungsverhalten des Lenkrades 19 zu ändern.

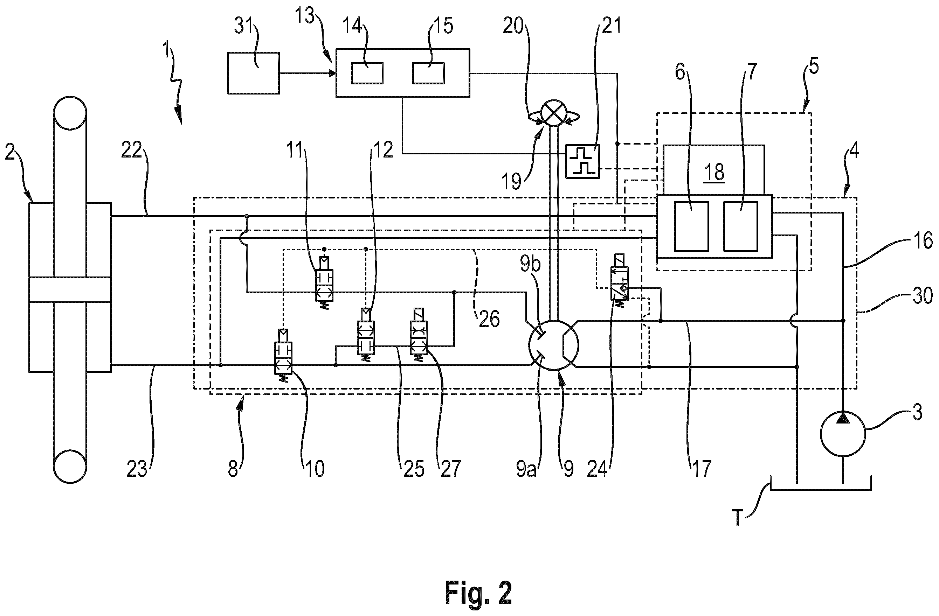

In Fig. 2 ist ein Blockschaltbild des Lenksystems 1 gemäß Fig. 1 nach einem weiteren Ausführungsbeispiel dargestellt. Diese Ausführungsform ermöglicht es, ein Betätigungsverhalten des Lenkrades 19 einzustellen, welches das Hervorrufen eines zunehmenden Widerstands beim Betätigen des Lenkrades 19 ist. Es wird eine vom Fahrer fühlbare Krafterhöhung am Lenkrad 19 generiert.

Hierzu ist vorgesehen, dass die zweite Lenksteuer- und Schalteinheit 8 zusätzlich ein elektrisch angesteuertes Drosselventil 27 umfasst. Das elektrisch angesteuerte Drosselventil 27 ist dem als NC-Ventil ausgeführten Schaltventil 12 in der Hydraulikleitung 25 vorgeschaltet. Das Drosselventil 27 ist dazu eingerichtet, den Volumenstrom zwischen der hydraulischen Einrichtung 9 und dem Tank T proportional zur Bestromung bis auf eine Mindestdurchflussmenge zu drosseln. Die Bestromung des Drosselventils 27 erfolgt in Abhängigkeit vom sich aufgrund der Lenkbewegung 20 des Lenkrades 19 einstellenden Lenkwinkels.

Das elektrisch angesteuerte Drosselventil 27 dient dazu, den im ersten Lenkmodus bzw. vollelektronischer Lenkmodus vom Orbitrol 9 direkt in den Tank T abgeleiteten Volumenstrom in unbestromtem Zustand ungedrosselt passieren zu lassen und mit zunehmender Bestromung bis auf eine Mindestdurchflussmenge zu drosseln. Durch die Drosselung des kurzgeschlossenen Volumenstroms lässt sich eine vom Fahrer fühlbare Krafterhöhung am Lenkrad 19 erzielen, welche ein weiteres Betätigungsverhalten des Lenkrades darstellt. Die Mindestdurchflussmenge ist dabei auf einen Wert eingestellt, welcher auch bei einer maximalen Bestromung gewährleistet, dass das Drehen des Lenkrades 19 durch den Fahrer möglich ist, um die Lenkbarkeit des Fahrzeugs auch bei einem Versagen des Drosselventils 27 sicherzustellen.

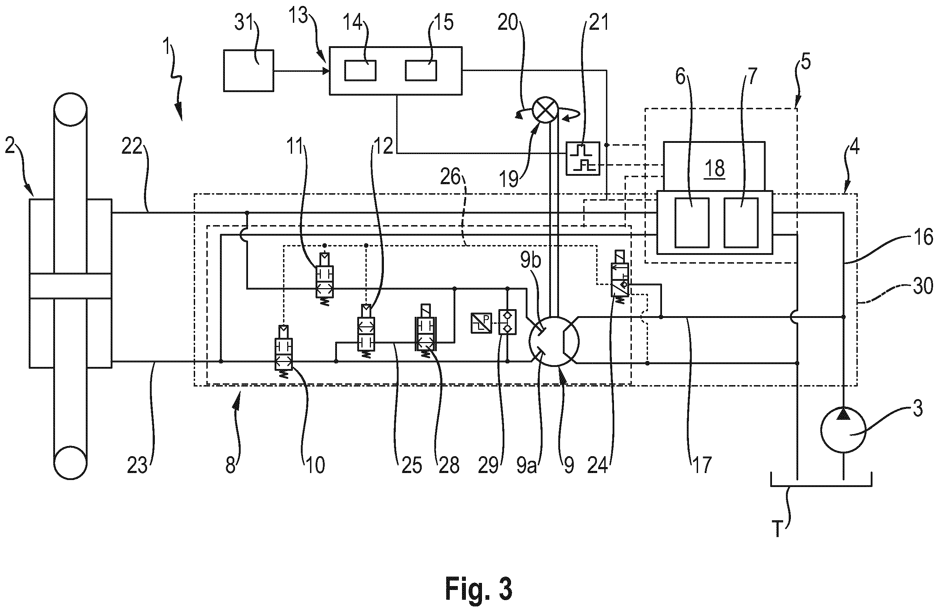

In Fig. 3 ist ein Blockschaltbild des Lenksystems 1 gemäß Fig. 1 nach einem dritten Ausführungsbeispiel dargestellt. Diese Ausführungsform ermöglicht es, ein Betätigungsverhalten des Lenkrades 19 einzustellen, welches zusätzlich zum Hervorrufen eines zunehmenden Widerstands beim Betätigen des Lenkrades 19 als zusätzliches Betätigungsverhalten des Lenkrades 19 das Erreichen eines Endanschlages des Lenkzylinders 2 simuliert.

Hierzu ist vorgesehen, dass die zweite Lenksteuer- und Schalteinheit 8 ein ebenfalls elektrisch angesteuertes Drosselventil 28 umfasst, welches dazu eingerichtet ist, den Volumenstrom proportional zur Bestromung bis zur Unterbrechung des Durchflusses zu drosseln. Das elektrisch angesteuerte Drosselventil 28 dient dazu, den im ersten Lenkmodus bzw. vollelektronischer Lenkmodus vom Orbitrol 9 direkt in den Tank T abgeleiteten Volumenstrom in unbestromtem Zustand ungedrosselt passieren zu lassen und mit zunehmender Bestromung zu drosseln, bis eine Unterbrechung des Durchflusses vorliegt. Auf diese Weise lässt sich ein Endanschlag des Lenkrades 19 als ein weiteres Betätigungsverhalten simulieren. Das anstelle des Drosselventils 27 verwendete Drosselventil 28 kann dabei dazu eingerichtet sein, sowohl mit zunehmender Bestromung bis auf eine Mindestdurchflussmenge zu drosseln als auch proportional zur Bestromung bis zur Unterbrechung des Durchflusses zu drosseln. Die Charakteristik der Ansteuerung des Drosselventils 28, d.h., dass das nur eine Drosselventil 28 bis zum Erreichen der Mindestdurchflussmenge oder bis zur Unterbrechung des Durchflusses drosselt, kann durch die Steuerungsvorrichtung 13 vorgegeben werden.

Hierbei kann es aus Gründen der Betriebssicherheit sinnvoll sein, dass zudem ein Druckschalter 29 vorgesehen ist, der in Abhängigkeit von einem durch die Betätigung des Lenkrades 19 eingeprägten Druck schaltet, um die Unterbrechung des Durchflusses aufzuheben. Somit kann vermieden werden, dass bei einem Versagen des Drosselventils 28 im Moment der Unterbrechung des Durchflusses das Lenkrad 19 nicht mehr betätigbar ist. In einer solchen Situation kann der Druckschalter 29 öffnen, um den vollelektronischen Lenkmodus aufzuheben. Dazu kann durch das Auslösen des Druckschalters die Verbindung der Ausgänge 9a, 9b des Orbitrols 9 mit den als NO-Ventilen ausgeführten Schaltventilen 10, 11 der zweiten Lenksteuer- und Schalteinheit 8 wiederhergestellt werden. Hierzu kann beim Erreichen eines Grenzwertes für den durch Betätigung des Lenkrades 19 eingeprägten Druck die Steuerungsvorrichtung 13 ein Signal an das Betätigungsventil 24 übermitteln, in welchem dieses ein Schaltstellung einnimmt, in der die Verbindung zwischen der Steuerleitung 26 und der Versorgungsleitung 17 unterbrochen ist.

Bevorzugt können das Betätigungsventil 24 und/oder das Drosselventil 27, 28 nebst dem Druckschalter 29 zusammen mit der ersten Lenksteuer- und Schalteinheit 5 und der zweite Lenksteuer- und Schalteinheit 8 mit ihren zugehörigen Komponenten in einem gemeinsamen Gehäuse 30 angeordnet sein. Eine alternative Ausführung sieht vor, dass die erste Lenksteuer- und Schalteinheit 5 und/oder die zweite Lenksteuer- und Schalteinheit 8 jeweils in einem separaten Gehäuse angeordnet sein können. Das Anordnen des Betätigungsventils 24 und/oder des Drosselventils 27, 28 nebst dem Druckschalter 29 in einem separaten Gehäuse hat den Vorteil, dass diese Komponenten nachrüstbar sind bzw. optional in Fahrzeugen verbaut werden können, welche den vollelektronischen Lenkmodus nutzen.

Die Steuerungsvorrichtung 13 ist dazu eingerichtet, die Bestromung des elektrisch angesteuerten Drosselventils 27 bzw. 28 in Abhängigkeit vom eingestellten Lenkwinkel einzustellen.

Den Ausführungsbeispielen ist weiter gemeinsam, dass der Steuerungsvorrichtung 13 ein Bedienelement 31 zur Ansteuerung des Betätigungsventils 24 zugeordnet ist, welches eine Selbsthaltefunktion aufweist. Somit kann eine elektrische Ansteuerung des Betätigungsventils 24 beispielsweise durch eine elektrische Selbsthaltung nach einer Betätigung des als Taster oder Schalter ausgeführten Bedienelementes 31 durch den Fahrer erfolgen. Durch das Betätigen des Bedienelementes 31 kann der Fahrer in den vollelektronischen Lenkmodus wechseln. Die elektrische Selbsthaltung kann durch eine erneute Betätigung des Bedienelementes 31 oder die Betätigung eines anderen Elementes, beispielsweise eines Straßenfahrschalters oder die Auswahl eines anderen Lenkprogrammes, wieder aufgegeben werden, so dass das Lenksystem 1 in einen anderen Lenkmodus, insbesondere den Lenkmodus Orbitrollenkung, wechselt bzw. zurückfällt.

### Bezugszeichenliste

| | |
|---|---|
| 1 | Lenksystem |
| 2 | Lenkzylinder |
| 3 | Versorgungseinheit |
| 4 | Ventileinheit |
| 5 | Erste Lenksteuer- und Schalteinheit |
| 6 | Proportionaleinheit |
| 7 | Sperreinheit |
| 8 | Zweite Lenksteuer- und Schalteinheit |
| 9 | Hydraulische Einrichtung/Orbitrol |
| 9a | Ausgang von 9 |
| 9b | Ausgang von 9 |
| 10 | Schaltventil (NO-Ventil) |
| 11 | Schaltventil (NO-Ventil) |
| 12 | Schaltventil (NC-Ventil) |
| 13 | Steuerungsvorrichtung |
| 14 | Speichereinheit |
| 15 | Recheneinheit |
| 16 | Versorgungsleitung |
| 17 | Versorgungsleitung |
| 18 | Elektronisches Modul |
| 19 | Lenkrad |
| 20 | Lenkbewegung |
| 21 | Lenkradgeber |
| 22 | Hydraulikleitung |
| 23 | Hydraulikleitung |
| 24 | Betätigungsventil |
| 25 | Hydraulikleitung |
| 26 | Steuerleitung |
| 27 | Drosselventil |
| 28 | Drosselventil |
| 29 | Druckschalter |
| 30 | Gehäuse |
| 31 | Bedienelement |
| T | Tank |

## Patentansprüche

1. Lenksystem (1) für ein landwirtschaftliches Fahrzeug, umfassend:
- mindestens eine primärgesteuerte Achse und mindestens eine weitere Achse, denen jeweils zumindest ein Lenkzylinder (2) zur Änderung eines Radeinschlagwinkels des landwirtschaftlichen Fahrzeugs zugeordnet ist,
- eine mit einer Versorgungseinheit (3) verbundene Ventileinheit (4) zur Druckbeaufschlagung der Lenkzylinder (2), wobei die Ventileinheit (4) eine erste Lenksteuer- und Schalteinheit (5) mit einer Proportionaleinheit (6) und einer Sperreinheit (7) sowie eine zweite Lenksteuer- und Schalteinheit (8) mit einer hydraulischen Einrichtung (9) und zumindest drei Schaltventilen (10, 11, 12) umfasst,
- zumindest eine Steuerungsvorrichtung (13, 18), die zur Ansteuerung der ersten Lenksteuer- und Schalteinheit (5) eingerichtet ist,
wobei das Lenksystem (1) in einem ersten Lenkmodus und zumindest einem weiteren Lenkmodus betreibbar ist, wobei die zumindest eine Steuerungsvorrichtung (13, 18) dazu eingerichtet ist, in dem ersten Lenkmodus eine Lenkbewegung (20) eines mit der zweiten Lenksteuer- und Schalteinheit (8) verbundenen Lenkrades (19) sensorisch zu erfassen und auszuwerten, um basierend auf der Auswertung die erste Lenksteuer-und Schalteinheit (5) anzusteuern, wobei die zumindest eine Steuerungsvorrichtung (13, 18) dazu eingerichtet ist, in dem ersten Lenkmodus mittels eines singulären, insbesondere elektrischen, Signals die mindestens drei Schaltventile (10, 11, 12) gleichzeitig anzusteuern, um zumindest ein Betätigungsverhalten des Lenkrades (19) einzustellen, wobei die zweite Lenksteuer- und Schalteinheit (8) ein elektrisch angesteuertes Betätigungsventil (24) umfasst, welches bei einer Ansteuerung durch das elektrische Signal der zumindest einen Steuerungsvorrichtung (13, 18) einen Schaltdruck bereitstellt, welcher die drei Schaltventile (10, 11, 12) gleichzeitig beaufschlagt.

2. Lenksystem (1) nach Anspruch 1, **dadurch gekennzeichnet, dass** die Beaufschlagung der drei Schaltventile (10, 11, 12) mit dem Schaltdruck des Betätigungsventils (24) zur Unterbrechung der hydraulischen Verbindung der zweiten Lenksteuer- und Schalteinheit (8) mit den Lenkzylindern (2) führt.

3. Lenksystem (1) nach Anspruch 1 oder 2, **dadurch gekennzeichnet, dass** zwei der Schaltventile (10, 11) als Normally Open Ventile (NO-Ventile) und eines der Schaltventile (12) als Normally Closed Ventil (NC-Ventil) ausgeführt sind.

4. Lenksystem (1) nach Anspruch 3, **dadurch gekennzeichnet, dass** das als NC-Ventil ausgeführte Schaltventil (12) zwischen Hydraulikleitungen (22, 23), welche die hydraulische Einrichtung (9) durch das jeweilige als NO-Ventil ausgeführte Schaltventil (10, 11) mit den Lenkzylindern (2) verbinden, angeordnet ist.

5. Lenksystem (1) nach Anspruch 4, **dadurch gekennzeichnet, dass** dem als NC-Ventil ausgeführten Schaltventil (12) ein elektrisch angesteuertes Drosselventil (27, 28) vorgeschaltet ist.

6. Lenksystem (1) nach Anspruch 5, **dadurch gekennzeichnet, dass** das Drosselventil (27) dazu eingerichtet ist, den Volumenstrom zwischen der hydraulischen Einrichtung (9) und einem Tank (T) proportional zur Bestromung bis auf eine Mindestdurchflussmenge zu drosseln.

7. Lenksystem (1) nach Anspruch 5 oder 6, **dadurch gekennzeichnet, dass** das Drosselventil (28) dazu eingerichtet ist, den Volumenstrom zwischen der hydraulischen Einrichtung (9) und einem Tank (T) proportional zur Bestromung bis zur Unterbrechung des Durchflusses zu drosseln.

8. Lenksystem (1) nach Anspruch 7, **dadurch gekennzeichnet, dass** ein Druckschalter (29) vorgesehen ist, der in Abhängigkeit von einem durch die Betätigung des Lenkrades (19) eingeprägten Druck schaltet, um die Unterbrechung des Durchflusses aufzuheben.

9. Lenksystem (1) nach einem der Ansprüche 5 bis 8, **dadurch gekennzeichnet, dass** die zumindest eine Steuerungsvorrichtung (13, 18) dazu eingerichtet ist, die Bestromung des elektrisch angesteuerten Drosselventils (27, 28) in Abhängigkeit vom eingestellten Lenkwinkel einzustellen.

10. Lenksystem (1) nach einem der vorangehenden Ansprüche, **dadurch gekennzeichnet, dass** der zumindest einen Steuerungsvorrichtung (13, 18) ein eine Selbsthaltefunktion aufweisendes Bedienelement (31) zur Ansteuerung des Betätigungsventils (24) zugeordnet ist.

11. Lenksystem (1) nach einem der vorangehenden Ansprüche, **dadurch gekennzeichnet, dass** ein Betätigungsverhalten des Lenkrades (19) ein fortgesetztes Betätigen des Lenkrades (19) unabhängig vom Erreichen eines Endanschlages des Lenkzylinders (2) der primärgesteuerten Achse ist.

12. Lenksystem (1) nach einem der vorangehenden Ansprüche, **dadurch gekennzeichnet, dass** ein Betätigungsverhalten des Lenkrades (19) das Hervorrufen eines zunehmenden Widerstands beim Betätigen des Lenkrades (19) ist.

13. Lenksystem (1) nach einem der vorangehenden Ansprüche, **dadurch gekennzeichnet, dass** ein Betätigungsverhalten des Lenkrades (19) das Erreichen eines Endanschlages des Lenkzylinders (2) simuliert.

14. Lenksystem (1) nach einem der vorhergehenden Ansprüche, **dadurch gekennzeichnet, dass** zumindest das Betätigungsventil (24) und/oder das Drosselventil (27, 28) in einem gemeinsamen Gehäuse (30) der ersten Lenksteuer- und Schalteinheit (5) und/oder der zweiten Lenksteuer- und Schalteinheit (8) oder in einem separaten Gehäuse angeordnet sind.

## Claims

1. A steering system (1) for an agricultural vehicle, comprising:
- at least one primary controlled axle and at least one further axle, each being associated with at least one steering cylinder (2) for changing a wheel steering angle of the agricultural vehicle,
- a valve unit (4) connected to a supply unit (3) for pressurizing the steering cylinders (2), wherein the valve unit (4) comprises a first steering control and switching unit (5) with a proportional unit (6) and a blocking unit (7) as well as a second steering control and switching unit (8) with a hydraulic device (9) and at least three on-off valves (10, 11, 12),
- at least one control device (13, 18), which is configured to control the first steering control and switching unit (5), wherein the steering system (1) can be operated in a first steering mode and at least one further steering mode, wherein in the first steering mode, the at least one control device (13, 18) is configured to detect and evaluate, by means of a sensor, a steering movement (20) of a steering wheel (19) connected to the second steering control and switching unit (8) in order to control the first steering control and switching unit (5) on the basis of the evaluation, wherein in the first steering mode, the at least one control device (13, 18) is configured to control the at least three on-off valves (10, 11, 12) simultaneously by means of a singular, in particular electrical, signal in order to set at least one actuation characteristic of the steering wheel (19), wherein the second steering control and switching unit (8) comprises an electrically controlled actuating valve (24) which, when controlled by the electrical signal, provides a switching pressure to the at least one control device (13, 18) which simultaneously pressurises the three on-off valves (10, 11, 12).

2. The steering system (1) according to claim 1, **characterized in that** the pressurisation of the three on-off valves (10, 11, 12) with the switching pressure of the actuating valve (24) results in the interruption of the hydraulic connection of the second steering control and switching unit (8) to the steering cylinders (2).

3. The steering system (1) according to claim 1 or claim 2, **characterized in that** two of the on-off valves (10, 11) are constructed as normally open valves (NO valves) and one of the on-off valves (12) is constructed as a normally closed valve (NC valve).

4. The steering system (1) according to claim 3, **characterized in that** the on-off valve (12) constructed as a NC valve is disposed between hydraulic lines (22, 23) which connect the hydraulic device (9) to the steering cylinders (2) via the respective on-off valve (10, 11) constructed as a NO valve.

5. The steering system (1) according to claim 4, **characterized in that** an electrically controlled flow control valve (27, 28) is connected upstream of the on-off valve (12) constructed as a NC valve.

6. The steering system (1) according to claim 5, **characterized in that** the flow control valve (27) is configured to restrict the volumetric flow between the hydraulic device (9) and a tank (T) proportionally to the energisation down to a minimum flow rate.

7. The steering system (1) according to 5 or claim 6,
**characterized in that** the flow control valve (28) is configured to restrict the volumetric flow between the hydraulic device (9) and a tank (T) proportionally to the energisation until the flow is interrupted.

8. The steering system (1) according to claim 7, **characterized in that** a pressure switch (29) is provided which switches as a function of a pressure exerted by the actuation of the steering wheel (19) in order to cancel the interruption of the flow.

9. The steering system (1) according to one of claims 5 to 8, **characterized in that** the at least one control device (13, 18) is configured to adjust the energisation of the electrically controlled flow control valve (27, 28) as a function of the set steering angle.

10. The steering system (1) according to one of the preceding claims, **characterized in that** the at least one control device (13, 18) is associated with an operating element (31) with a self-retaining function for controlling the actuating valve (24).

11. The steering system (1) according to one of the preceding claims, **characterized in that** an actuation characteristic of the steering wheel (19) is a continued actuation of the steering wheel (19) independently of reaching an end stop of the steering cylinder (2) of the primary controlled axle.

12. The steering system (1) according to one of the preceding claims, **characterized in that** an actuation characteristic of the steering wheel (19) is the generation of an increasing resistance when the steering wheel (19) is actuated.

13. The steering system (1) according to one of the preceding claims, **characterized in that** an actuation characteristic of the steering wheel (19) simulates reaching an end stop of the steering cylinder (2).

14. The steering system (1) according to one of the preceding claims, **characterized in that** at least the actuating valve (24) and/or the flow control valve (27, 28) is or are disposed in a common housing (30) of the first steering control and switching unit (5) and/or or of the second steering control and switching unit (8) or are disposed in a separate housing.

## Revendications

1. Système de direction (1) destiné à un véhicule agricole, comprenant :
- au moins un essieu à commande primaire et au moins un essieu supplémentaire, auxquels est associé respectivement au moins un vérin de direction (2) destiné à modifier un angle de braquage des roues du véhicule agricole,
- une unité de vannes (4) qui est reliée à une unité d'alimentation (3) et est destinée à appliquer une pression aux vérins de direction (2), l'unité à vannes (4) comportant une première unité de commande de direction et de commutation (5), dotée d'une unité proportionnelle (6) et d'une unité d'arrêt (7), ainsi qu'une deuxième unité de commande de direction et de commutation (8) dotée d'un dispositif hydraulique (9) et d'au moins trois vannes de commutation (10, 11, 12),
- au moins un dispositif de commande (13, 18) qui est conçu pour l'activation de la première unité de commande de direction et de commutation (5),
le système de direction (1) pouvant être exploité dans un premier mode de direction et au moins un autre mode de direction, le dispositif de commande (13, 18), au nombre d'au moins un, étant conçu pour détecter par capteur, dans le premier mode de direction, et évaluer un mouvement de direction (20) d'un volant (19) relié à la deuxième unité de commande de direction et de commutation (8), afin d'activer la première unité de commande de direction et de commutation (5), sur la base de l'évaluation, le dispositif de commande (13, 18), au nombre d'au moins un, étant conçu pour activer, dans le premier mode de direction, simultanément les vannes de commutation (10, 11, 12), au nombre d'au moins trois, au moyen d'un signal singulier, notamment électrique, aux fins de régler au moins un comportement d'actionnement du volant (19), la deuxième unité de commande de direction et de commutation (8) comportant une vanne d'actionnement (24) à activation électrique, qui, lors d'une activation par le signal électrique du dispositif de commande (13, 18), au nombre d'au moins un, fournit une pression de commutation qui agit simultanément sur les trois vannes de commutation (10, 11, 12).

2. Système de direction (1) selon la revendication 1, **caractérisé en ce que** l'application de la pression de commutation de la vanne d'actionnement (24) aux trois vannes de commutation (10, 11, 12) a pour effet d'interrompre la liaison hydraulique entre la deuxième unité de commande de direction et de commutation (8) et les vérins de direction (2).

3. Système de direction (1) selon la revendication 1 ou 2, **caractérisé en ce que** deux des vannes de commutation (10, 11) sont réalisées sous forme de vannes normalement ouvertes (vannes NO), et l'une des vannes de commutation (12) est réalisée comme vanne normalement fermée (vanne NC).

4. Système de direction (1) selon la revendication 3, **caractérisé en ce que** la vanne de commutation (12) réalisée sous forme de vanne NC est placée entre des conduites hydrauliques (22, 23) qui relient le dispositif hydraulique (9) aux vérins de direction (2) par l'intermédiaire de la vanne de commutation (10, 11) respective réalisée comme vanne NO.

5. Système de direction (1) selon la revendication 4, **caractérisé en ce qu'**une vanne d'étranglement (27, 28) à activation électrique est placée en amont de la vanne de commutation (12) réalisée comme vanne NC.

6. Système de direction (1) selon la revendication 5, **caractérisé en ce que** la vanne d'étranglement (27) est conçue pour réduire le flux volumique entre le dispositif hydraulique (9) et un réservoir (T) jusqu'à un débit minimal, proportionnellement à l'alimentation en courant.

7. Système de direction (1) selon la revendication 5 ou 6, **caractérisé en ce que** la vanne d'étranglement (28) est conçue pour réduire le flux volumique entre le dispositif hydraulique (9) et un réservoir (T) jusqu'à l'interruption de l'écoulement, proportionnellement à l'alimentation en courant.

8. Système de direction (1) selon la revendication 7, **caractérisé en ce qu'**il est prévu un interrupteur à pression (29) qui agit en fonction d'une pression appliquée par l'actionnement du volant (19), aux fins d'annuler l'interruption du débit.

9. Système de direction (1) selon une des revendications 5 à 8, **caractérisé en ce que** le dispositif de commande (13, 18), au nombre d'au moins un, est conçu pour régler l'alimentation en courant de la vanne d'étranglement (27, 28) à activation électrique, en fonction de l'angle de direction réglé.

10. Système de direction (1) selon une des revendications précédentes, **caractérisé en ce qu'**un élément de manœuvre (31) ayant une fonction d'automaintien est associé au dispositif de commande (13, 18), au nombre d'au moins un, aux fins d'activer la vanne d'actionnement (24).

11. Système de direction (1) selon une des revendications précédentes, **caractérisé en ce qu'**un comportement d'actionnement du volant (19) est un actionnement continu du volant (19), indépendamment du fait qu'une butée de fin de course du vérin de direction (2) de l'essieu à commande primaire est atteinte.

12. Système de direction (1) selon une des revendications précédentes, **caractérisé en ce qu'**un comportement d'actionnement du volant (19) est la génération d'une résistance croissante lors de l'actionnement du volant (19).

13. Système de direction (1) selon une des revendications précédentes, **caractérisé en ce qu'**un comportement d'actionnement du volant (19) simule le fait qu'une butée de fin de course du vérin de direction (2) est atteinte.

14. Système de direction (1) selon une des revendications précédentes, **caractérisé en ce qu'**au moins la vanne d'actionnement (24) et/ou la vanne d'étranglement (27, 28) sont disposées dans un boîtier (30) commun de la première unité de commande de direction et de commutation (5) et/ou de la deuxième unité de commande de direction et de commutation (8) ou dans un boîtier séparé.
